# FASCICULE DE BREVET EUROPEEN

(11) **EP 4 458 682 B1**
(45) Date de publication et mention de la délivrance du brevet: **04.02.2026**
(21) Numéro de dépôt: 24172599.3
(22) Date de dépôt: 26.04.2024
(51) Int. Cl.: B64D 37/30, B64D 37/32, F02C 9/46, F02C 3/22, F02C 7/232, F02M 37/00, F16K 17/04, B64D 41/00

(54) **AÉRONEF COMPRENANT AU MOINS UN CIRCUIT D'ALIMENTATION EN FLUIDE ÉQUIPÉ D'AU MOINS UN OBTURATEUR À FERMETURE AUTOMATIQUE**
FLUGZEUG MIT MINDESTENS EINER FLÜSSIGKEITSVERSORGUNGSSCHALTUNG MIT MINDESTENS EINEM SELBSTSCHLIESSENDEN VERSCHLUSS
AIRCRAFT COMPRISING AT LEAST ONE FLUID SUPPLY CIRCUIT PROVIDED WITH AT LEAST ONE SELF-CLOSING SHUTTER

(30) Priorité: 04.05.2023 FR 2304473
(43) Date de publication de la demande: 06.11.2024
(73) Titulaire: Airbus SAS, 31700 Blagnac Cedex (FR); AIRBUS OPERATIONS (S.A.S.), 31060 Toulouse (FR)
(72) Inventeur: MOGILKA, Philippe, 31700 BLAGNAC (FR); CZAPLA, Lionel, TOULOUSE (FR)
(74) Mandataire: Fantin, Laurent

(56) Documents cités:
- GB-A- 2 591 255
- US-A1- 2002 117 210
- US-A1- 2012 248 251

## Description

La présente demande se rapporte à un aéronef comprenant au moins un circuit d'alimentation en fluide équipé d'au moins un obturateur à fermeture automatique.

Selon un mode de réalisation, un aéronef comprend plusieurs ensembles de propulsion comportant chacun une nacelle et une motorisation fonctionnant à l'hydrogène, positionnée dans la nacelle. L'aéronef comprend également au moins un réservoir d'hydrogène ainsi que, pour chaque motorisation, au moins un circuit d'alimentation en hydrogène reliant le réservoir d'hydrogène et la motorisation.

Chaque motorisation comprend une zone d'éjection de débris dans laquelle peuvent être éjectés des débris provenant de la motorisation en cas d'incidents.

Selon une configuration, le circuit d'alimentation en hydrogène traverse la zone d'éjection de débris. Dans ce cas, il est nécessaire de prévoir des boucliers positionnés dans la zone d'éjection de débris, entre la motorisation et le circuit d'alimentation en hydrogène, afin d'éviter que les débris éjectés depuis la motorisation ne percutent le circuit d'alimentation en hydrogène. Cette configuration n'est pas satisfaisante car elle conduit à augmenter la masse de l'aéronef.

GB 2591255 A décrit un avion comprenant : un fuselage doté d'une coque pressurisée, d'un carénage et d'un espace non pressurisé entre la coque pressurisée et le carénage. Une ou plusieurs conduites de carburant s'étendent à l'intérieur de l'espace non pressurisé, depuis le réservoir de carburant jusqu'au moteur. US 2012248251 A1 décrit un système de protection de conduit, comprenant : un conduit destiné à transporter un fluide ; un récipient étanche entourant le conduit le long d'une zone protégée du conduit ; et une vanne mobile entre une première position pour obstruer l'écoulement du fluide à travers la zone protégée du conduit et une deuxième position pour permettre l'écoulement du fluide à travers la zone protégée du conduit.

La présente invention vise à remédier à tout ou partie des inconvénients de l'art antérieur.

A cet effet, l'invention a pour objet un aéronef selon la revendication 1. L'aéronef comprend au moins une motorisation, au moins une zone d'éjection de débris provenant de la motorisation ainsi qu'au moins un circuit d'alimentation en fluide comportant au moins deux conduits qui canalisent un fluide selon une direction d'écoulement d'amont en aval, positionnés au moins partiellement dans la zone d'éjection.

Selon l'invention, le circuit d'alimentation en fluide comprend au moins un obturateur positionné dans un premier conduit en amont de la zone d'éjection et configuré pour occuper un état ouvert dans lequel l'obturateur permet au fluide de s'écouler dans le premier conduit et un état fermé dans lequel l'obturateur empêche le fluide de s'écouler dans le premier conduit, au moins un élément de rappel configuré pour pousser l'obturateur à l'état fermé ainsi qu'au moins une commande positionnée au moins partiellement dans la zone d'éjection et configurée pour occuper un premier état, dit état intact, dans lequel la commande maintient l'obturateur à l'état ouvert à l'encontre de l'élément de rappel et un deuxième état, dit état brisé, dans lequel la commande cesse de maintenir l'obturateur.

Lorsqu'un débris vient à briser la commande, l'obturateur n'est plus maintenu à l'état ouvert par la commande et bascule automatiquement et immédiatement à l'état fermé. Ainsi, il est possible de placer une partie du circuit d'alimentation en fluide dans la zone d'éjection en conservant un haut niveau de sécurité, sans augmenter significativement la masse de l'aéronef.

L'obturateur comprend un siège qui présente un orifice de passage canalisant le fluide ainsi qu'un élément mobile configuré pour se déplacer selon la direction d'écoulement entre une position écartée du siège qui correspond à l'état ouvert de l'obturateur et une position en contact avec le siège qui correspond à l'état fermé de l'obturateur.

Selon une autre caractéristique, l'élément de rappel est positionné dans le premier conduit qui comprend un épaulement distant du siège, l'élément de rappel étant un ressort de compression présentant une première extrémité en contact avec l'élément mobile ainsi qu'une deuxième extrémité en contact avec l'épaulement du premier conduit.

La commande comprend au moins une tige positionnée dans un deuxième conduit du circuit d'alimentation en fluide, au moins une première butée solidaire de la tige, au moins une deuxième butée solidaire du deuxième conduit ainsi qu'au moins une liaison coulissante reliant la tige et le deuxième conduit et permettant une translation de la tige dans le deuxième conduit selon la direction d'écoulement. En complément, la tige, les première et deuxième butées ainsi que le siège sont configurés de manière à ce que, dans le premier état de la commande, la première butée, solidaire de la tige, soit en contact avec la deuxième butée, solidaire du conduit, et que la tige soit en contact avec l'élément mobile de l'obturateur et le maintienne en position écartée du siège.

Selon une autre caractéristique, le deuxième conduit est partiellement positionné dans la zone d'éjection et s'étend entre des première et deuxième extrémités positionnées de part et d'autre de la zone d'éjection.

Selon une autre caractéristique, la zone d'éjection est délimitée par des première et deuxième surfaces, la commande comprenant des première et deuxième liaisons coulissantes positionnées respectivement au niveau des première et deuxième surfaces délimitant la zone d'éjection.

Selon une autre caractéristique, les premier et deuxième conduits présentent des premier et deuxième plans de jonction plaqués l'un contre l'autre lorsque les premier et deuxième conduits sont reliés, le premier conduit étant positionné en amont du deuxième conduit. En complément, la commande comprend au moins une partie positionnée en saillie par rapport au deuxième plan de jonction du deuxième conduit et configurée pour pénétrer dans le premier conduit afin de pousser l'obturateur à l'état ouvert.

Selon une autre caractéristique, la commande comprend des première et deuxième liaisons coulissantes, la deuxième liaison coulissante, la plus éloignée de la première extrémité, assurant la fonction de deuxième butée, la première butée étant positionnée entre les première et deuxième liaisons coulissantes.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef,
- La figure 2 est une représentation schématique d'une partie d'un ensemble de propulsion illustrant un mode de réalisation de l'invention,
- La figure 3 est une représentation schématique d'une partie d'un circuit d'alimentation en fluide, équipé d'un obturateur à fermeture automatique à l'état ouvert, illustrant un mode de réalisation de l'invention,
- La figure 4 est une représentation schématique de la partie du circuit d'alimentation visible sur la figure 3 avant son assemblage,
- La figure 5 est une représentation schématique de la partie du circuit d'alimentation visible sur la figure 3 au moment où elle est sectionnée par un débris, l'obturateur à fermeture automatique étant encore à l'état ouvert,
- La figure 6 est une représentation schématique de la partie du circuit d'alimentation visible sur la figure 3 sectionnée par un débris, l'obturateur à fermeture automatique étant à l'état fermé.

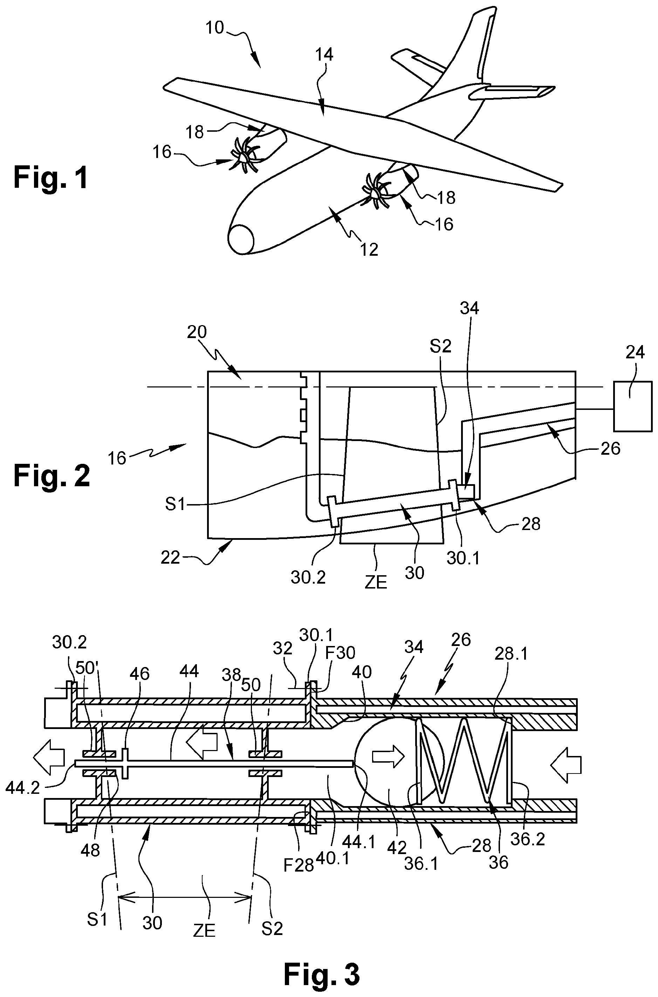

Selon un mode de réalisation visible sur la figure 1, un aéronef 10 comprend un fuselage 12, une voilure 14 ainsi qu'au moins un ensemble de propulsion 16 positionné sous la voilure 14 et relié à cette dernière par un mât 18.

Comme illustré sur la figure 2, l'ensemble de propulsion 16 comprend une motorisation 20 utilisant de l'hydrogène, comme un turboréacteur à hydrogène ou un moteur électrique alimenté par des piles à combustible par exemple, ainsi qu'une nacelle 22 qui forme un carénage entourant la motorisation 20.

L'aéronef comprend au moins une zone d'éjection ZE de débris provenant de la motorisation 20 dans laquelle peuvent être éjectés des débris en cas d'incidents, comme un débris d'un disque de turbine par exemple. Chaque zone d'éjection ZE est délimitée par des première et deuxième surfaces S1, S2.

L'aéronef 10 comprend également au moins un réservoir d'hydrogène 24 positionné dans le fuselage 12 et/ou la voilure 14 ainsi que, pour chaque ensemble de propulsion 16, au moins un circuit d'alimentation en hydrogène 26 reliant le réservoir d'hydrogène 24 et la motorisation 20.

Selon un mode de réalisation, le circuit d'alimentation en hydrogène 26 comprend plusieurs conduits 28, 30 à double peau configurés pour canaliser l'hydrogène, disposés bout à bout et reliés deux à deux par au moins un élément de liaison 32, au moins un desdits conduits 28, 30 étant situé au moins partiellement dans la zone d'éjection ZE.

Bien entendu, l'invention n'est pas limitée à cette application. Quel que soit le mode de réalisation, l'aéronef 10 comprend au moins un circuit d'alimentation en fluide 26 comprenant au moins un conduit 28, 30 positionné au moins partiellement dans la zone d'éjection ZE. Bien qu'illustrée avec des conduits à double peau, l'invention n'est aucunement limitée à ce type de conduits, qui peuvent être à simple paroi.

Pour la suite de la description, les termes amont/aval font référence au sens d'écoulement du fluide dans le circuit d'alimentation 26, qui s'écoule selon une direction d'écoulement de l'amont vers l'aval.

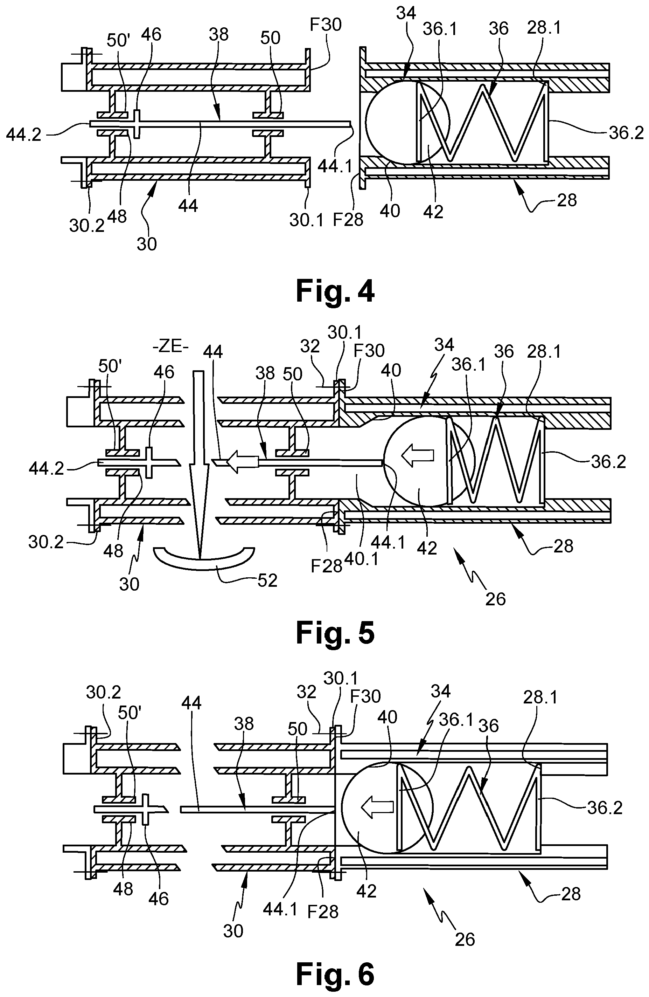

Le circuit d'alimentation en fluide 26 comprend au moins un obturateur 34 positionné dans un premier conduit 28, en amont de la zone d'éjection ZE, et configuré pour occuper un état ouvert (visible sur les figures 3 et 5) dans lequel l'obturateur 34 permet au fluide de s'écouler dans le premier conduit 28 et un état fermé (visible sur les figures 4 et 6) dans lequel l'obturateur 34 empêche le fluide de s'écouler dans le premier conduit 28, au moins un élément de rappel 36 configuré pour pousser l'obturateur 34 à l'état fermé ainsi qu'au moins une commande 38 positionnée au moins partiellement dans la zone d'éjection ZE et configurée pour occuper un premier état, dit état intact, dans lequel la commande 38 maintient l'obturateur 34 à l'état ouvert à l'encontre de l'élément de rappel 36 et un deuxième état, dit état brisé, dans lequel la commande 38 cesse de maintenir l'obturateur 34, qui passe automatiquement à l'état fermé grâce à l'élément de rappel 36. L'élément de rappel 36 exerce alors sa force de rappel sur l'obturateur 34, qui permet de maintenir l'obturateur 34 à l'état fermé.

Selon un agencement, l'obturateur 34 est positionné dans un premier conduit 28 et la commande 38 est positionnée dans un deuxième conduit 30.

Selon un mode de réalisation, l'obturateur 34 comprend un siège 40, solidaire du premier conduit 28, qui présente un orifice de passage 40.1 canalisant le fluide ainsi qu'un élément mobile 42, comme une sphère par exemple, positionné dans le premier conduit 28 et mobile selon la direction d'écoulement entre une position écartée du siège 40 qui correspond à l'état ouvert de l'obturateur 34 ainsi qu'une position en contact avec le siège 40 qui correspond à l'état fermé de l'obturateur 34. Selon un agencement, le siège 40 correspond à une réduction de section de passage du premier conduit 28. Le siège 40 et l'élément mobile 42 sont configurés de sorte que lorsque l'élément mobile 42 est en contact avec le siège 40, il obture l'orifice de passage 40.1 de manière étanche. L'orifice de passage 40.1 est sensiblement centré par rapport au premier conduit 28.

Selon un mode de réalisation, l'élément de rappel 36 est positionné dans le premier conduit 28, qui comprend un épaulement 28.1 distant du siège 40. Selon un agencement, l'élément mobile 42 est positionné entre l'élément de rappel 36 et le siège 40 et l'élément de rappel 36 est situé entre l'élément mobile 42 et l'épaulement 28.1 du premier conduit 28. Selon une configuration, l'élément de rappel 36 est un ressort de compression qui présente une première extrémité 36.1 en contact avec l'élément mobile 42 ainsi qu'une deuxième extrémité 36.2 en contact avec l'épaulement 28.1 du premier conduit 28.

Selon un mode de réalisation, la commande 38 comprend au moins une tige 44, positionnée dans le deuxième conduit 30, sensiblement rectiligne qui s'étend entre des première et deuxième extrémités 44.1, 44.2, au moins une première butée 46 solidaire de la tige 44, au moins une deuxième butée 48 solidaire du deuxième conduit 30 ainsi qu'au moins une liaison coulissante 50 reliant la tige 44 et le deuxième conduit 30 et permettant une translation de la tige 44 dans le deuxième conduit 30 selon la direction d'écoulement, la première extrémité 44.1 de la tige 44 étant orientée vers l'obturateur 34. La tige 44, les première et deuxième butées 46, 48 ainsi que le siège 40 sont configurés de manière à ce que, dans le premier état de la commande 38 (la tige 44 étant intacte), la première butée 46, solidaire de la tige 44, soit en contact avec la deuxième butée 48, solidaire du deuxième conduit 30, et que la première extrémité 44.1 de la tige 44 soit en contact avec l'élément mobile 42 de l'obturateur 34 et le maintienne en position écartée du siège 40 à l'encontre des efforts exercés par l'élément de rappel 36.

La commande 38 comprend deux liaisons coulissantes 50, 50' espacées, configurées de sorte que la tige 44 soit sensiblement coaxiale au deuxième conduit 30.

Selon un agencement, l'obturateur 34 est positionné en amont de la commande 38. L'élément de rappel 36 est positionné en amont de l'élément mobile 42 lui-même positionné en amont du siège 40.

Selon une configuration, le deuxième conduit 30 est partiellement positionné dans la zone d'éjection ZE et s'étend entre des première et deuxième extrémités 30.1, 30.2 positionnées de part et d'autre de la zone d'éjection ZE. Le premier conduit 28 est situé hors de la zone d'éjection ZE, en amont de cette zone. Selon cette configuration, les première et deuxième liaisons coulissantes 50, 50' sont positionnées respectivement à proximité des première et deuxième extrémités 30.1, 30.2 du deuxième conduit 30, respectivement au niveau des première et deuxième surfaces S1, S2. Le deuxième conduit 30 pourrait être positionné à l'extérieur de la nacelle 22 dans un compartiment dédié.

Selon un agencement, la première extrémité 30.1 du deuxième conduit 30 est orientée vers l'obturateur 34. La deuxième liaison coulissante 50', la plus éloignée de la première extrémité 30.1, assure la fonction de deuxième butée 48, la première butée 46 étant positionnée entre les première et deuxième liaisons coulissantes 50, 50'.

Selon un mode de réalisation, les premier et deuxième conduits 28, 30 présentent des premier et deuxième plans de jonction F28, F30 plaqués l'un contre l'autre lorsque les premier et deuxième conduits 28, 30 sont reliés. Lorsque la commande 38 est à l'état intact, au moins une partie de cette commande 38, plus particulièrement la première extrémité 44.1 de sa tige 44, est positionnée en saillie par rapport au deuxième plan de jonction F30 du deuxième conduit 30 et configurée pour pénétrer dans le premier conduit 28 afin de pousser l'obturateur 34 à l'état ouvert.

Le principe de fonctionnement de l'obturateur 34 est décrit au regard des figures 3 à 6. Avant d'être assemblés, les premier et deuxième conduits 28, 30 sont espacés. La première extrémité 44.1 de la tige 44 est en saillie par rapport au deuxième plan de jonction F30 du deuxième conduit 30. L'élément mobile 42 est plaqué contre le siège 40 par l'élément de rappel 36.

Lorsque les premier et deuxième conduits 28, 30 sont assemblés, la première butée 46 de la tige 44 est en contact avec la deuxième butée 48, solidaire du deuxième conduit 30, et la première extrémité 44.1 de la tige 44 pousse l'élément mobile 42 dans sa position écartée à l'encontre de l'élément de rappel 36.

En fonctionnement, lorsque la commande 38 est à l'état intact, l'obturateur 34 est à l'état ouvert, comme illustré sur la figure 3.

Lors d'un incident, un débris 52 peut endommager le deuxième conduit 30 et briser la tige 44 de la commande 38, qui passe à l'état brisé.

Lorsque la tige 44 est brisée, la partie de la tige 44 comprenant sa première extrémité 44.1 n'est plus maintenue par la deuxième butée 48, solidaire du deuxième conduit 30. Dès lors, l'élément mobile 42 n'étant plus maintenu par la tige 44, l'élément de rappel 36 le pousse contre le siège 40, provoquant automatiquement le passage de l'obturateur 34 à l'état fermé. Grâce à cet obturateur à fermeture automatique, il est possible de positionner une partie du circuit d'alimentation en fluide dans la zone d'éjection ZE sans qu'il ne soit nécessaire de le renforcer et/ou de prévoir des boucliers. Cette solution permet d'optimiser la masse de l'aéronef. Si le conduit situé dans la zone d'éjection ZE est brisé par un débris éjecté de la motorisation 20, l'obturateur 34 coupe automatiquement et immédiatement l'alimentation en fluide.

## Revendications

1. Aéronef comprenant :
- au moins une motorisation (20),
- au moins une zone d'éjection (ZE) de débris provenant de la motorisation (20),
- au moins un circuit d'alimentation en fluide (26) comportant :
o au moins des premier et deuxième conduits (28, 30) qui canalisent un fluide selon une direction d'écoulement d'amont en aval et positionnés au moins partiellement dans la zone d'éjection (ZE), le circuit d'alimentation en fluide (26) comprenant :
- au moins un obturateur (34) positionné dans le premier conduit (28) en amont de la zone d'éjection (ZE) et configuré pour occuper un état ouvert dans lequel l'obturateur (34) permet au fluide de s'écouler dans les premier et deuxième conduits (28, 30) et un état fermé dans lequel l'obturateur (34) empêche le fluide de s'écouler dans les premier et deuxième conduits (28, 30), **caractérisé en ce que** l'obturateur (34) comprend :
o un siège (40) qui présente un orifice de passage (40.1) canalisant le fluide,
o un élément mobile (42) configuré pour se déplacer selon la direction d'écoulement entre une position écartée du siège (40) qui correspond à l'état ouvert de l'obturateur (34) et une position en contact avec le siège (40) qui correspond à l'état fermé de l'obturateur (34),
o au moins un élément de rappel (36) configuré pour pousser l'obturateur (34) à l'état fermé,
o au moins une commande (38) positionnée au moins partiellement dans la zone d'éjection (ZE) et configurée pour occuper un premier état dans lequel la commande (38) maintient l'obturateur (34) à l'état ouvert à l'encontre de l'élément de rappel (36) et un deuxième état dans lequel la commande (38) cesse de maintenir l'obturateur (34), la commande (38) comprenant :
▪ au moins une tige (44) positionnée dans le deuxième conduit (30),
▪ au moins une première butée (46) solidaire de la tige (44),
▪ au moins une deuxième butée (48) solidaire du deuxième conduit (30),
▪ au moins une liaison coulissante (50) reliant la tige (44) et le deuxième conduit (30) et permettant à la tige (44) de se translater selon la direction d'écoulement,
▪ la tige (44), les première et deuxième butées (46, 48) ainsi que le siège (40) étant configurés de manière à ce que, dans le premier état de la commande (38), la première butée (46), solidaire de la tige (44), soit en contact avec la deuxième butée (48), solidaire du conduit (30), et que la tige (44) soit en contact avec l'élément mobile (42) de l'obturateur (34) et le maintienne en position écartée du siège (40).

2. Aéronef selon la revendication précédente, **caractérisé en ce que** l'élément de rappel (36) est positionné dans le premier conduit (28), qui comprend un épaulement (28.1) distant du siège (40), et **en ce que** l'élément de rappel (36) est un ressort de compression qui présente une première extrémité (36.1) en contact avec l'élément mobile (42) ainsi qu'une deuxième extrémité (36.2) en contact avec l'épaulement (28.1) du premier conduit (28).

3. Aéronef selon l'une des revendications précédentes, **caractérisé en ce que** le deuxième conduit (30) est partiellement positionné dans la zone d'éjection (ZE) et s'étend entre des première et deuxième extrémités (30.1, 30.2) positionnées de part et d'autre de la zone d'éjection (ZE).

4. Aéronef selon la revendication précédente, **caractérisé en ce que** la zone d'éjection (ZE) est délimitée par des première et deuxième surfaces (S1, S2) et **en ce que** la commande (38) comprend des première et deuxième liaisons coulissantes (50, 50') positionnées respectivement au niveau des première et deuxième surfaces (S1, S2) délimitant la zone d'éjection (ZE).

5. Aéronef selon l'une des revendications précédentes, **caractérisé en ce que** le premier conduit (28) est positionné en amont du deuxième conduit (30), **en ce que** les premier et deuxième conduits (28, 30) présentent des premier et deuxième plans de jonction (F28, F30) plaqués l'un contre l'autre lorsque les premier et deuxième conduits (28, 30) sont reliés et **en ce que** la commande (38) comprend au moins une partie positionnée en saillie par rapport au deuxième plan de jonction (F30) du deuxième conduit (30) et configurée pour pénétrer dans le premier conduit (28) afin de pousser l'obturateur (34) à l'état ouvert.

6. Aéronef selon l'une des revendications précédentes, **caractérisé en ce que** la commande (38) comprend des première et deuxième liaisons coulissantes (50, 50'), la deuxième liaison coulissante (50'), la plus éloignée de la première extrémité (30.1), assurant la fonction de deuxième butée (48), la première butée (46) étant positionnée entre les première et deuxième liaisons coulissantes (50, 50').

## Patentansprüche

1. Luftfahrzeug umfassend:
- wenigstens einer Motorisierung (20),
- wenigstens eine Ausstoßzone (ZE) von Trümmern aus der Motorisierung (20),
- wenigstens eine Fluidzuführung (26) mit:
o wenigstens einer erste und einer zweiten Leitung (28, 30), die ein Fluid in einer Strömungsrichtung von stromaufwärts nach stromabwärts führen und zumindest teilweise in der Ausstoßzone (ZE) angeordnet sind,
wobei die Fluidzuführung (26) umfasst:
- wenigstens einen Verschluss (34), der in der ersten Leitung (28) stromaufwärts der Ausstoßzone (ZE) angeordnet und so eingerichtet ist, dass er einen offenen Zustand einnimmt, in dem der Verschluss (34) es dem Fluid ermöglicht, in der ersten und zweiten Leitung (28, 30) zu fließen, und dass er einen geschlossenen Zustand einnimmt, in dem der Verschluss (34) das Fluid daran hindert, in der ersten und zweiten Leitung (28, 30) zu fließen, **dadurch gekennzeichnet, dass** der Verschluss (34) umfasst:
o einen Sitz (40), der eine Durchgangsöffnung (40.1) bildet, die das Fluid führt,
o ein bewegliches Element (42), das so eingerichtet ist, dass es sich entlang der Strömungsrichtung zwischen einer vom Sitz (40) beabstandeten Position, die dem offenen Zustand des Verschlusses (34) entspricht, und einer Position in Kontakt mit dem Sitz (40), die dem geschlossenen Zustand des Verschlusses (34) entspricht, bewegt,
o wenigstens ein Rückstellelement (36), das so eingerichtet ist, dass es den Verschluss (34) in den geschlossenen Zustand drückt,
o wenigstens eine Steuerung (38), die wenigstens teilweise in der Ausstoßzone (ZE) angeordnet und so eingerichtet ist, dass sie einen ersten Zustand einnimmt, in dem die Steuerung (38) den Verschluss (34) gegen das Rückstellelement (36) im offenen Zustand hält, und dass sie einen zweiten Zustand einnimmt, in dem die Steuerung (38) aufhört, den Verschluss (34) zu halten, wobei die Steuerung (38) umfasst:
▪ wenigstens eine Stange (44), die in der zweiten Leitung (30) angeordnet ist,
▪ wenigstens einen ersten Anschlag (46), der fest mit der Stange (44) verbunden ist,
▪ wenigstens einen zweiten Anschlag (48), der fest mit der zweiten Leitung (30) verbunden ist,
▪ wenigstens eine Gleitverbindung (50), die die Stange (44) und die zweite Leitung (30) verbindet und es der Stange (44) ermöglicht, sich entlang der Strömungsrichtung translatorisch zu bewegen,
▪ wobei die Stange (44), der erste und der zweite Anschlag (46, 48) sowie der Sitz (40) so eingerichtet sind, dass im ersten Zustand der Steuerung (38) der erste Anschlag (46), der fest mit der Stange (44) verbunden ist, mit dem zweiten Anschlag (48), der fest mit der Leitung (30) verbunden ist, in Kontakt steht, und dass die Stange (44) mit dem beweglichen Element (42) des Verschlusses (34) in Kontakt steht und es in einer vom Sitz (40) entfernten Position hält.

2. Luftfahrzeug nach dem vorhergehenden Anspruch, **dadurch gekennzeichnet, dass** das Rückstellelement (36) in der ersten Leitung (28) angeordnet ist, die eine Schulter (28.1) aufweist, die von dem Sitz (40) entfernt ist, und dass das Rückstellelement (36) eine Druckfeder ist, die ein erstes Ende (36.1) aufweist, das mit dem beweglichen Element (42) in Kontakt steht, sowie ein zweites Ende (36.2) aufweist, das mit der Schulter (28.1) des ersten Kanals (28) in Kontakt steht.

3. Luftfahrzeug nach einem der vorhergehenden Ansprüche, **dadurch gekennzeichnet, dass** die zweite Leitung (30) teilweise in der Ausstoßzone (ZE) angeordnet ist und sich zwischen einem ersten und einem zweiten Ende (30.1, 30.2) erstreckt, die beidseits der Ausstoßzone (ZE) angeordnet sind.

4. Luftfahrzeug nach dem vorhergehenden Anspruch, **dadurch gekennzeichnet, dass** die Ausstoßzone (ZE) durch eine erste und eine zweite Fläche (S1, S2) begrenzt ist und dass die Steuerung (38) eine erste und eine zweite Gleitverbindung (50, 50') aufweist, die jeweils im Bereich der ersten und der zweiten Fläche (S1, S2) angeordnet sind, die die Ausstoßzone (ZE) begrenzen.

5. Luftfahrzeug nach einem der vorhergehenden Ansprüche, **dadurch gekennzeichnet, dass** die erste Leitung (28) stromaufwärts der zweiten Leitung (30) angeordnet ist, dass die erste und die zweite Leitung (28, 30) eine erste und eine zweite Verbindungsebene (F28, F30) aufweisen, die aneinander angesetzt sind, wenn die erste und die zweite Leitung (28, 30) verbunden sind, und dass die Steuerung (38) wenigstens einen Teil umfasst, der in Bezug auf die zweite Verbindungsebene (F30) der zweiten Leitung (30) vorstehend angeordnet und so eingerichtet ist, dass er in die erste Leitung (28) eindringt, um den Verschluss (34) in den offenen Zustand zu drücken.

6. Luftfahrzeug nach einem der vorhergehenden Ansprüche, **dadurch gekennzeichnet, dass** die Steuerung (38) erste und zweite Gleitverbindungen (50, 50') umfasst, wobei die zweite Gleitverbindung (50'), die am weitesten von dem ersten Ende (30.1) entfernt ist, die Funktion eines zweiten Anschlags (48) übernimmt und wobei der erste Anschlag (46) zwischen den ersten und zweiten Gleitverbindungen (50, 50') angeordnet ist.

## Claims

1. Aircraft comprising:
- at least one engine system (20),
- at least one zone (ZE) for ejecting debris coming from the engine system (20),
- at least one fluid supply circuit (26) comprising:
o at least first and second ducts (28, 30) which channel a fluid in a direction of flow from upstream to downstream and positioned at least partially in the ejection zone (ZE),
the fluid supply circuit (26) comprising :
- at least one shutter (34) positioned in the first duct (28) upstream of the ejection zone (ZE) and configured to occupy an open state in which the shutter (34) allows the fluid to flow in the first and second ducts (28, 30) and a closed state in which the shutter (34) prevents the fluid from flowing in the first and second ducts (28, 30),
**characterized in that** the shutter (34) comprises:
o a seat (40) which has a through-orifice (40.1) channelling the fluid,
o a movable element (42) configured to be displaced in the direction of flow between a position separated from the seat (40) which corresponds to the open state of the shutter (34) and a position in contact with the seat (40) which corresponds to the closed state of the shutter (34),
o at least one return element (36) configured to push the shutter (34) to the closed state,
o at least one control (38) positioned at least partially in the ejection zone (ZE) and configured to occupy a first state in which the control (38) holds the shutter (34) in the open state against the return element (36) and a second state in which the control (38) ceases to hold the shutter (34), the control (38) comprising:
▪ at least one rod (44) positioned in the second duct (30),
▪ at least one first stop (46) secured to the rod (44),
▪ at least one second stop (48) secured to the second duct (30),
▪ at least one sliding link (50) linking the rod (44) and the second duct (30) and allowing the rod (44) to be translated in the direction of flow,
▪ the rod (44), the first and second stops (46, 48) and the seat (40) being configured such that, in the first state of the control (38), the first stop (46), secured to the rod (44), is in contact with the second stop (48), secured to the duct (30), and that the rod (44) is in contact with the movable element (42) of the shutter (34) and holds it in a position separated from the seat (40).

2. Aircraft according to the preceding claim, **characterized in that** the return element (36) is positioned in the first duct (28), which comprises a shoulder (28.1) at a distance from the seat (40), and **in that** the return element (36) is a compression spring which has a first end (36.1) in contact with the movable element (42) and a second end (36.2) in contact with the shoulder (28.1) of the first duct (28).

3. Aircraft according to one of the preceding claims, **characterized in that** the second duct (30) is partially positioned in the ejection zone (ZE) and extends between first and second ends (30.1, 30.2) positioned on either side of the ejection zone (ZE).

4. Aircraft according to the preceding claim, **characterized in that** the ejection zone (ZE) is delimited by first and second surfaces (S1, S2) and **in that** the control (38) comprises first and second sliding links (50, 50') positioned respectively at the first and second surfaces (S1, S2) delimiting the ejection zone (ZE).

5. Aircraft according to one of the preceding claims, **characterized in that** the first duct (28) is positioned upstream of the second duct (30), and **in that** the first and second ducts (28, 30) have first and second joining planes (F28, F30) pressed against one another when the first and second ducts (28, 30) are linked and **in that** the control (38) comprises at least a part positioned protruding with respect to the second joining plane (F30) of the second duct (30) and configured to penetrate into the first duct (28) in order to push the shutter (34) to the open state.

6. Aircraft according to one of the preceding claims, **characterized in that** the control (38) comprises first and second sliding links (50, 50'), the second sliding link (50'), the furthest away from the first end (30.1), ensuring the second stop (48) function, the first stop (46) being positioned between the first and second sliding links (50, 50').
